# FASCICULE DE BREVET EUROPEEN

(11) **EP 2 502 034 B1**
(45) Date de publication et mention de la délivrance du brevet: **05.08.2015**
(21) Numéro de dépôt: 10792996.0
(22) Date de dépôt: 16.11.2010
(51) Int. Cl.: G01F 23/284, G01F 23/292, G01F 23/296, G01F 25/00, G01F 15/06, B65F 1/14, B65F 1/16

(54) **DISPOSITIF AUTONOME DE MESURE TELERELEVE D'UN TAUX DE REMPLISSAGE D'UN CONTENEUR**
SELBSTÄNDIGE MESSVORRICHTUNG FÜR DRAHTLOSE MESSUNG DER FÜLLGESCHWINDIGKEIT EINES BEHÄLTERS
STAND-ALONE MEASURING DEVICE FOR REMOTE READING OF A FILLING RATE OF A CONTAINER

(30) Priorité: 16.11.2009 FR 0905498
(43) Date de publication de la demande: 26.09.2012
(73) Titulaire: Sigrenea, 45160 Olivet (FR)
(72) Inventeur: VALETTE, Jérôme, F-45160 Olivet (FR); CHARLET, Franck, F-45650 Saint Jean Le Blanc (FR); HUREAU, Xavier, F-45770 Saran (FR)
(74) Mandataire: Thomas, Nadine
(86) Numéro de dépôt international: PCT/FR2010/052429
(87) Numéro de publication internationale: WO 2011/058287

(56) Documents cités:
- EP-A1- 0 042 464
- EP-A1- 0 876 970
- EP-A1- 1 482 285
- FR-A1- 2 767 192
- FR-A1- 2 868 839
- US-A- 4 551 719
- US-A1- 2007 159 326

## Description

L'invention concerne un dispositif autonome de mesure télérelevé d'un taux de remplissage d'un conteneur, notamment, d'un conteneur présentant au moins un orifice de remplissage et destiné à recevoir des déchets, en particulier, des déchets susceptibles de former, après leur introduction dans le conteneur via l'orifice de remplissage, des tas présentant, en regard de l'orifice de remplissage, une surface accidentée. Il peut s'agir, par exemple, des déchets tels que du verre, du carton, des bouteilles de plastiques, des sacs d'ordures ménagères, des déchets verts et des vêtements.

Plus précisément, l'invention concerne, selon un premier de ses aspects, un dispositif autonome de mesure télérelevé d'un taux de remplissage d'un conteneur destiné à recevoir des déchets, le dispositif autonome comportant :
▪ un moyen d'attache adapté à fixer le dispositif autonome sur une face interne du conteneur,
▪ au moins un premier capteur adapté à mesurer ledit taux de remplissage et à générer des premières données en rapport avec les mesures du taux de remplissage,
▪ au moins un module électronique de commande comportant une horloge et un moyen de télécommunication, le module électronique étant, à des instants successifs, adapté :
   ∘ à déclencher le premier capteur,
   ∘ à recevoir les premières données provenant du premier capteur, et
   ∘ à communiquer les premières données par l'intermédiaire du moyen de télécommunication à un appareil distant de télécommunication ;
▪ une source d'énergie électrique adaptée à alimenter en énergie électrique le module électronique de commande et au moins le premier capteur.

Un tel dispositif autonome est bien connu de l'homme du métier comme la montre, par exemple, la demande de brevet d'invention français FR 2 868 839 A1 ou US2007/159326 A1. Le taux de remplissage du conteneur y est apprécié en fonction de la distance entre le tas de déchets et le premier capteur. Dans ce cas, un compromis délicat doit être réalisé entre, d'une part, la nécessité de fixer, à l'aide du moyen d'attache, le dispositif autonome connu sur la face interne du conteneur en regard du tas de déchets et, d'autre part, la complexité d'accès à ladite face interne depuis l'extérieur, via l'orifice de remplissage présentant généralement une ouverture restreinte, pour un installateur du dispositif autonome connu.

La présente invention, qui s'appuie sur cette observation originale, a principalement pour but de proposer un dispositif autonome visant au moins à réduire l'une au moins des limitations précédemment évoquées. A cette fin, le dispositif autonome, par ailleurs conforme à la définition générique qu'en donne le préambule ci-dessus, est essentiellement caractérisé en ce qu'il comporte en outre au moins une articulation conçue pour assurer au moins un positionnement spatial réglable du premier capteur par rapport à la face interne du conteneur.

Grâce à cet agencement, l'installateur peut fixer, à l'aide du moyen d'attache, le dispositif autonome selon l'invention sur la face interne du conteneur dans un endroit facile d'accès depuis l'extérieur. Puis, l'installateur peut positionner, à l'aide de l'articulation, le premier capteur par rapport à la face interne du conteneur de sorte qu'il soit en regard du tas de déchets. Cela rend le montage du dispositif autonome plus aisé et rapide. En plus, grâce à cet agencement, l'endroit de fixation du dispositif autonome peut être choisi par l'installateur en fonction des critères prédéterminés, par exemple, pour rendre le dispositif autonome le moins visible de l'extérieur via l'orifice de remplissage. Cela contribue à réduire des risques des actes de vandalisme visant à détruire le dispositif autonome.

Le dispositif autonome comporte une enceinte de protection comprenant :
▪ un premier compartiment adapté à recevoir le premier capteur et
▪ un deuxième compartiment solidaire du moyen d'attache et adapté à recevoir le module électronique avec la source d'énergie électrique,
les premier et deuxième compartiments étant liés l'un à l'autre par l'intermédiaire de l'articulation.

Grâce à cet agencement, le dispositif autonome présente une architecture du type « blocs indépendants multiples » dans lequel chaque compartiment peut être fabriqué et transporté de manière indépendante l'un de l'autre. Cela rend le dispositif autonome moins fragile et facilite son montage (car les premier et deuxième compartiments peuvent être introduits « un par un » à l'intérieur du conteneur, via l'orifice de remplissage, puis y être rassemblé également « un par un »). En outre, cela facilite l'entretien du dispositif autonome (notamment, son entretien correctif) car le compartiment défaillant peut être remplacé individuellement sans le démontage du dispositif autonome du conteneur. Enfin, la présence de l'articulation entre les premier et deuxième compartiments permet à l'installateur d'agir uniquement sur le premier compartiment pour réguler le positionnement du premier capteur ce qui permet de protéger davantage le module électronique des sollicitations mécaniques et contribue à augmenter sa durée de vie.

De manière alternative, le dispositif autonome comporte une enceinte de protection comprenant :
▪ un premier compartiment adapté à recevoir le premier capteur et
▪ un deuxième compartiment adapté à recevoir le module électronique avec la source d'énergie électrique,
les premier et deuxième compartiments étant solidaires, d'une part, l'un de l'autre, et, d'autre part, du moyen d'attache, et le moyen d'attache comporte ladite articulation.

Grâce à ces agencements, le dispositif autonome est moins fragile et résiste mieux à des sollicitations mécaniques pouvant perturber le positionnement spatial du premier capteur, par exemple, lors des opérations de déchargement du containeur rempli.

De préférence, l'enceinte de protection présente une forme cylindrique.

Cet agencement contribue à faciliter le montage du dispositif autonome et, en particulier, l'introduction pour l'installateur du dispositif autonome à l'intérieur du containeur via l'orifice de remplissage présentant l'ouverture réduite. En outre, cela contribue à minimiser le volume occupé par le dispositif autonome monté à l'intérieur du containeur.

Avantageusement, le dispositif autonome comporte en outre au moins un deuxième capteur lié au module électronique et adapté à mesurer un état d'environnement du conteneur et à générer des deuxièmes données en rapport avec les mesures dudit état d'environnement. Le module électronique est, à des instants successifs, adapté à recevoir les deuxièmes données provenant du deuxième capteur et à communiquer les deuxièmes données par l'intermédiaire du moyen de télécommunication à l'appareil distant de télécommunication. L'enceinte de protection comprend au moins un troisième compartiment lié à l'un au moins parmi les premier et deuxième compartiments, le troisième compartiment étant adapté à recevoir ledit deuxième capteur.

Ces agencements contribuent à élargir les capacités fonctionnelles du dispositif autonome, par exemple, d'envoyer une alerte (à destination de l'appareil distant) propre à un changement de l'état d'environnement du containeur, par exemple, de son état physique.

Selon une première variante de réalisation, l'état d'environnement peut être propre à la température à l'intérieur du conteneur. Dans ce cas, le deuxième capteur comprend un premier actionneur adapté à se mettre dans un état actif lorsque la température à l'intérieur du conteneur mesurée par le deuxième capteur dépasse un seuil préétabli.

Grâce à ces agencements, il est possible, par exemple, d'identifier un début d'incendie et d'agir immédiatement après cette identification à l'aide du premier actionneur, par exemple, en émettant une sirène.

Selon une deuxième variante de réalisation, l'état d'environnement est propre à une présence d'un corps sélectif à l'extérieur du container. Dans ce cas, le deuxième capteur comprend un deuxième actionneur adapté à se mettre dans un état actif lorsque le deuxième capteur identifie la présence dudit corps sélectif à l'extérieur du container.

Grâce à ces agencements, il est possible, par exemple, d'identifier une personne habilitée à déposer les déchets dans le containeur et d'agir immédiatement après cette identification à l'aide du deuxième actionneur, par exemple, en ouvrant l'orifice de remplissage lorsque la personne habilitée y dépose ses déchets.

Selon une troisième variante de réalisation, l'état d'environnement est propre à une première plage horaire. Dans ce cas, le deuxième capteur comprend un troisième actionneur adapté à se mettre dans un état actif lorsque le deuxième capteur constate ladite première plage horaire sélective.

Grâce à ces agencements, il est possible, par exemple, de fermer, à l'aide du troisième actionneur, l'orifice de remplissage pendant des heures nocturnes, les weekends, les jours fériés etc. pour éviter des nuisances sonores dues au dépôt de déchets dans le conteneur.

De préférence, le premier capteur est adapté à mesurer un volume du conteneur libre de déchets et le module électronique comporte un moyen de calcul adapté à restituer le taux de remplissage du conteneur en fonction dudit volume libre.

Les mesures volumiques du taux de remplissage du conteneur apparaissent comme plus fiables par rapport à des mesures unidirectionnelles classiques évoquées ci-dessus et basées sur la distance entre le tas de déchets et le premier capteur. En effet, ces dernières sont imprécises lorsque les déchets déposés dans le conteneur y forment un ou plusieurs tas présentant des surfaces accidentées.

Avantageusement, le module électronique peut comporter en outre :
▪ un générateur de nombres pseudo-aléatoires adapté à émettre des consignes de déclenchement au moins du premier capteur,
▪ un moyen mémoire adapté à préenregistrer au moins une plage temporelle préférentielle de déclenchement du premier capteur et une quantité maximale de mesures du premier capteur autorisée dans la plage temporelle préférentielle.

Dans ce cas, le générateur de nombres pseudo-aléatoires est adapté :
▪ à fonctionner uniquement dans ladite plage temporelle préférentielle et
▪ à émettre, dans ladite plage temporelle préférentielle, les consignes en quantité inférieure ou égale à ladite quantité maximale.

Grâce à ces agencements, les mesures réalisées par le premier capteur s'opère de manière manifestement non périodique. Cela contribue à rendre plus fiables des calculs statistiques visant à reconstituer la dynamique de remplissage du containeur dans le temps.

Selon un deuxième de ses aspects, l'invention concerne une utilisation du dispositif autonome selon l'invention, dans laquelle au moins le premier capteur est choisi parmi les capteurs suivants : (a) émetteur-récepteur acoustiques ; (b) émetteur-récepteur ultrasonores ; (c) émetteur-récepteur infrarouges ; (d) émetteur-récepteur laser ; (e) capteur inductif ; (f) capteur capacitif ; (g) capteur vidéo.

Cette utilisation contribue à rendre les mesures du taux de remplissage du conteneur plus fiables. En outre, il est ainsi possible d'optimiser le type du premier capteur par rapport à la nature de déchets et/ou à leur capacité de former des amas hétérogènes lors de leur entassement dans le containeur.

Selon un troisième de ses aspects, l'invention concerne une pluralité d'au moins deux dispositifs autonomes selon l'invention, ces dispositifs autonomes étant disposés à distance l'un de l'autre (par exemple, dans le même containeur et/ou dans les containeurs voisins) et sont interconnectés en réseau de communication de dispositifs autonomes à l'aide des moyens respectifs de télécommunication, l'un au moins parmi lesdits dispositifs autonomes étant apte à communiquer, d'une part, avec l'autre parmi lesdits dispositifs autonomes, et, d'autre part, avec l'appareil distant de télécommunication représenté, par exemple, par un serveur d'un réseau distant (Internet, satellitaire, téléphonie mobile etc.).

Grâce à ces agencements, il est possible d'optimiser en temps réel, depuis un centre de contrôle unique connecté au serveur distant, un ramassage de déchets stockés à l'échelle d'une ville (d'une commune, d'un département, d'un région), en fonction des taux réels de remplissage des containeurs mesurés par la pluralité des dispositifs autonomes interconnectés en réseau de communication.

D'autres caractéristiques et avantages de l'invention ressortiront clairement de la description qui en est faite ci-après, à titre indicatif et nullement limitatif, en référence aux dessins annexés, dans lesquels :
la figure 1 représente de manière schématique en vue simplifiée en perspective un premier mode de réalisation du dispositif autonome selon l'invention fixé à un conteneur,
la figure 2 représente de manière schématique en vue simplifiée de face le premier mode de réalisation du dispositif autonome selon l'invention illustré sur la figure 1,
la figure 3 représente un schéma de principe d'un dispositif autonome selon l'invention,
la figure 4 représente de manière schématique en vue simplifiée de côté le dispositif autonome selon l'invention équipé d'un en fonctionnement dans le conteneur,
la figure 5 représente de manière schématique en vue simplifiée partielle de côté le dispositif autonome selon l'invention dont le premier capteur est du type « émetteur-récepteur ultrasonores » en fonctionnement dans le conteneur,
la figure 6 représente de manière schématique en vue simplifiée partielle de côté une pluralité des deux dispositifs autonomes selon l'invention en fonctionnement dans le conteneur.

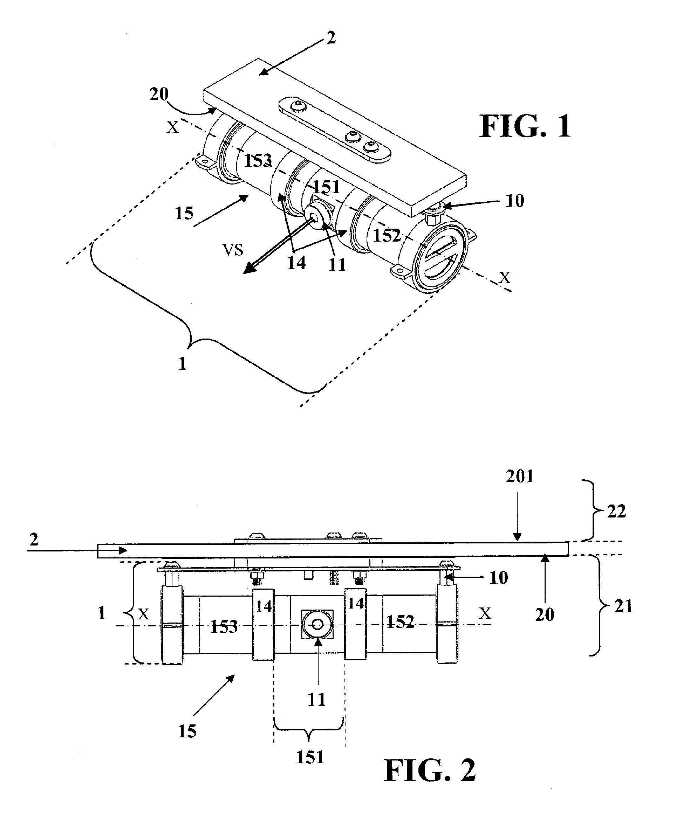

Comme annoncé précédemment et illustré sur les figures 1-6, l'invention concerne, un dispositif autonome 1 de mesure télérelevé d'un taux de remplissage d'un conteneur 2 destiné à recevoir des déchets 3.

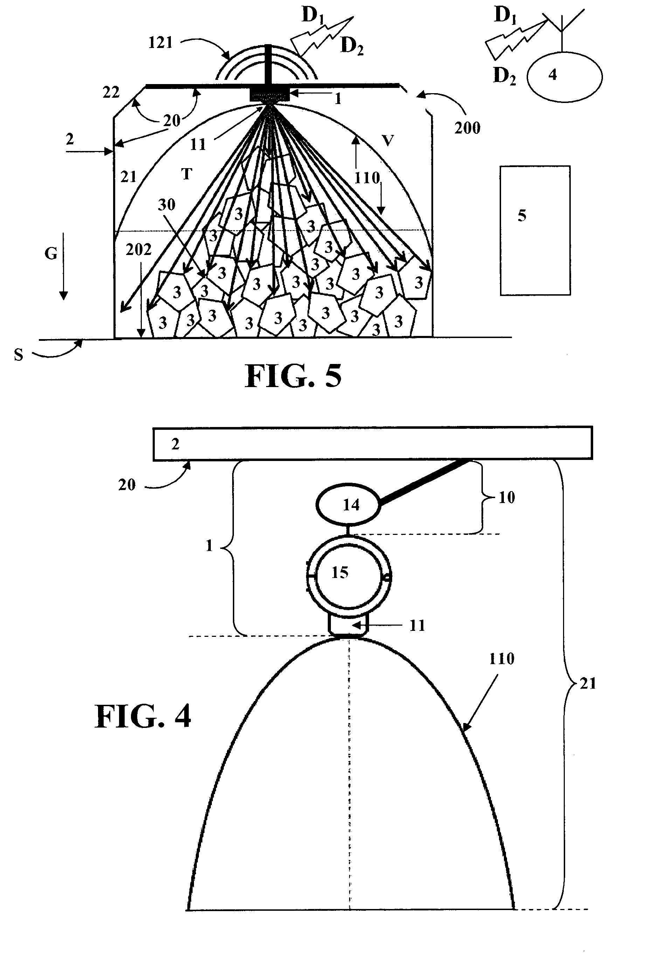

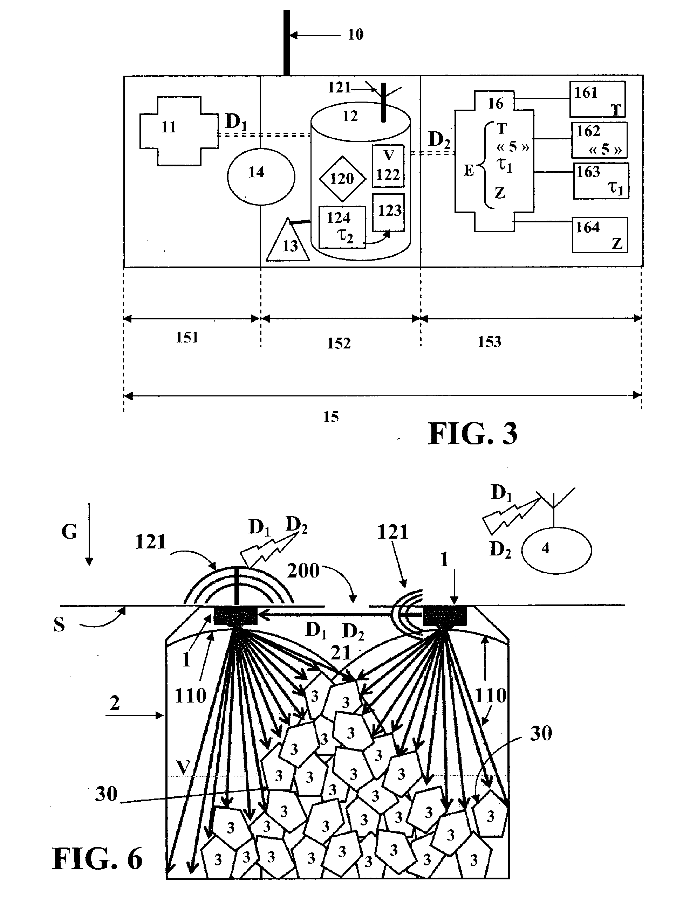

Le conteneur 2 peut être disposé sur un sol S (figure 5) ou être enterré (figure 6) et comporte au moins un orifice 200 de remplissage. Le conteneur 2 présente une face interne 20 donnant sur l'intérieur 21 du conteneur 2 et une face externe 201 (opposée à la face interne 20) donnant sur l'extérieur 22 du conteneur 2 (figure 2). Les déchets 3 tels que du verre, du carton, des bouteilles de plastiques, des sacs d'ordures ménagères, des déchets verts et des vêtements, sont introduits à l'intérieur 21 du conteneur 2 via l'orifice 200 de remplissage et tombent, sous l'effet de la pesanteur G, à l'opposé orifice 200 de remplissage, sur un fond 202 du conteneur 2 (figure 5), où ils forment au moins un tas présentant, en regard de l'orifice 200 de remplissage, une surface accidentée 30 (figures 5-6).

Le dispositif autonome 1 comporte :
▪ au moins un moyen d'attache 10 adapté à fixer le dispositif autonome 1 sur au moins une face interne 20 du conteneur 2,
▪ au moins un premier capteur 11 adapté à mesurer ledit taux de remplissage et à générer des premières données D₁ en rapport avec les mesures du taux de remplissage,
▪ au moins un module électronique 12 de commande comportant une horloge 120 et un moyen de télécommunication 121, le module électronique 12 étant, à des instants successifs, adapté :
   o à déclencher le premier capteur 11,
   o à recevoir les premières données D₁ provenant du premier capteur 11 (figure 3), et
   ∘ à communiquer les premières données D₁ par l'intermédiaire du moyen de télécommunication 121 à un appareil distant 4 de télécommunication (figure 5) ;
▪ au moins une source 13 d'énergie électrique adaptée à alimenter en énergie électrique le module électronique 12 de commande et au moins le premier capteur 11.

Selon l'invention, le dispositif autonome 1 comporte en outre au moins une articulation 14 conçue pour assurer au moins un positionnement spatial réglable du premier capteur 11 par rapport à la face interne 20 du conteneur 2.

Grâce à l'articulation 14, le premier capteur 11 peut être mobile autour d'un premier axe de rotation (axe XX sur la figure 1). En outre, le premier capteur 11 peut être mobile autour d'un deuxième axe de rotation (non représenté), de préférence orthogonal au premier axe XX. Grâce à cette configuration, l'axe de visée VS du capteur (flèche double sur la figure 1) peut aisément être positionné par un opérateur de sorte que cet axe de visée VS passe par le centre du conteneur 2, ce qui permet d'obtenir de meilleures mesures, et ce quelle que soit la position du dispositif autonome 1 dans un conteneur 2.

Selon l'invention illustré sur les figures 1-3, le dispositif autonome 1 comporte une enceinte de protection 15 comprenant :
▪ un premier compartiment 151 adapté à recevoir le premier capteur 11 et
▪ un deuxième compartiment 152 solidaire du moyen d'attache 10 et adapté à recevoir le module électronique 12 avec la source 13 d'énergie électrique,
les premier et deuxième compartiments 151, 152 étant liés l'un à l'autre par l'intermédiaire de l'articulation 14.

L'articulation 14 comporte, de préférence, des moyens d'étanchéité (non représentés) adaptés à assurer l'étanchéité entre les premier et deuxième compartiments 151, 152.

Ces agencements contribuent à protéger le premier capteur 11 et le module électronique 12 contre une corrosion et/ou des infiltrations dues à la présence des agents agressifs, par exemple, de l'humidité, à l'intérieur 21 du conteneur 2.

De manière alternative, illustré sur la figure 4, le dispositif autonome 1 comporte l'enceinte de protection 15 comprenant :
▪ le premier compartiment 151 adapté à recevoir le premier capteur 11 et
▪ le deuxième compartiment 152 adapté à recevoir le module électronique 12 avec la source 13 d'énergie électrique,
les premier et deuxième compartiments 151, 152 étant solidaires, d'une part, l'un de l'autre, et, d'autre part, du moyen d'attache 10, et le moyen d'attache 10 comporte ladite articulation 14.

Comme illustré sur la figure 1, le dispositif autonome 1 et, en particulier, l'enceinte de protection 15 du dispositif autonome 1, présente une forme cylindrique, de préférence, cylindrique de rotation.

C'est-à-dire que l'on peut prévoir que l'enceinte de protection 15 soit solidaire en rotation du premier capteur 11, par exemple autour du premier axe XX de rotation, ou au contraire que celle-ci soit non mobile, solidaire des moyens d'attache 10 et que seul le premier capteur 11 soit mobile par l'intermédiaire de l'articulation 14.

Le dispositif autonome 1 peut comporter en outre au moins un deuxième capteur 16 lié au module électronique 12 et adapté à mesurer un état d'environnement E du conteneur 2 et à générer des deuxièmes données D₂ en rapport avec les mesures dudit état d'environnement E (figure 3, 5). Le module électronique 12 est, à des instants successifs, adapté à recevoir les deuxièmes données D₂ provenant du deuxième capteur 16 et à communiquer les deuxièmes données D₂ par l'intermédiaire du moyen de télécommunication 121 à l'appareil distant 4 de télécommunication (figure 5). L'enceinte de protection 15 comprend au moins un troisième compartiment 153 lié à l'un au moins parmi les premier et deuxième compartiments 151, 152, le troisième compartiment 153 étant adapté à recevoir ledit deuxième capteur 16.

Comme illustré sur les figures 1-2, dans ledit premier mode de réalisation du dispositif autonome 1, lorsque le premier compartiment 151 est lié d'une part, au troisième compartiment 153, et, d'autre part, au deuxième compartiment 152, les deuxième et troisième compartiments 152, 153 étant distants l'un de l'autre, l'articulation 14 est disposée, à la fois, entre les premier et troisième compartiments 151, 153, et entre les premier et deuxième compartiments 151, 152, afin d'assurer le positionnement spatial réglable du premier capteur 11 par rapport à la face interne 20 du conteneur 2.

Selon une première variante de réalisation, l'état d'environnement E est propre à la température T à l'intérieur 21 du conteneur 2 (figure 5). Dans ce cas, le deuxième capteur 16 comprend un premier actionneur 161 (figure 3) adapté à se mettre dans un état actif lorsque la température T à l'intérieur 21 du conteneur 2 mesurée par le deuxième capteur 16 dépasse un seuil préétabli.

Le premier actionneur 161 peut comporter, par exemple, des moyens anti incendie (non représentés). Ces derniers peuvent, par exemple, se présenter comme une porte enfermant l'orifice 200 de remplissage pour interdire un accès d'air frais vers les déchets 3 enflammés.

Selon une deuxième variante de réalisation, l'état d'environnement E est propre à une présence d'un corps sélectif 5 (par exemple, un utilisateur du conteneur 2) à l'extérieur 22 du container 2 (figures 5). Dans ce cas le deuxième capteur 16 comprend un deuxième actionneur 162 (figure 3) adapté à se mettre dans un état actif lorsque le deuxième capteur 162 identifie la présence dudit corps sélectif 5 à l'extérieur 22 du container 2.

Cette variante de réalisation permet de limiter l'accès au conteneur 2 aux seules personnes habilitées à l'utiliser. Le deuxième actionneur 162 peut comporter, par exemple, des moyens de déverrouillage (non représentés) de l'orifice 200 de remplissage adaptés à autoriser l'accès à l'intérieur 21 du conteneur 2 uniquement aux personnes identifiées, habilitées à utiliser le conteneur 2.

Selon une troisième variante de réalisation, l'état d'environnement E est propre à une première plage horaire τ₁ (figure 3). Dans ce cas, le deuxième capteur 16 comprend un troisième actionneur 163 adapté à se mettre dans un état actif lorsque le deuxième capteur 16 constate ladite première plage horaire τ₁.

Selon une quatrième variante de réalisation, l'état d'environnement E est propre à un état gazeux Z à l'intérieur 21 du containeur 2. Dans ce cas, le deuxième capteur 16 comprend un quatrième actionneur 164 adapté à se mettre dans un état actif lorsque le deuxième capteur 16 constate l'état gazeux Z autre que celui de référence.

Dans ce cas, le deuxième capteur 16 peut comporter au moins un analyseur de gaz (par exemple, un analyseur de méthane, ce dernier pouvant être libéré par les déchets 3 stockés dans le conteneur 2). Le quatrième actionneur 164 peut comporter un ventilateur (non représenté) adapté à ventiler l'intérieur 21 du conteneur pour éjecter le méthane à l'extérieur 22 du conteneur 2 via l'orifice de remplissage 200. En outre, le quatrième actionneur 164 peut comporter une alarme (non représentée) sonore et/ou visuelle adaptée à donner alerte du type « danger d'explosion ».

Grâce à ces agencements, le dispositif autonome 1 contribue à sécuriser davantage le conteneur 2 où sont déposés les déchets 3.

De manière plus générale, le dispositif autonome 1 est également modulable, c'est-à-dire qu'il peut comprendre une pluralité de modules individuels ou compartiments 151, 152, 153 couplés deux à deux, éventuellement mobiles en rotation entre eux. Chaque compartiment comprend par exemple les moyens nécessaires à la réalisation d'une fonction respective (éventuellement unique) : mesure d'un type de données dans un compartiment, mesure d'un autre type de données dans un autre compartiment, détection et extinction incendie dans un autre compartiment, alimentation en énergie (piles), etc.

Il est ainsi très facile d'adapter le dispositif autonome 1 aux besoins locaux, c'est-à-dire aux besoins de surveillance de tel ou tel type de compartiment en sélectionnant et assemblant tels ou tels compartiments.

De préférence, les dites première et/ou deuxième, et/ou troisième, et/ou quatrième variantes de réalisation peuvent être confondues. Cela élargie les possibilités fonctionnelles du dispositif autonome 1.

Comme illustré sur les figures 5-6, le premier capteur 11 est adapté à mesurer un volume V du conteneur 2 libre de déchets 3. Il s'agit du volume libre V défini entre la face interne 20 du conteneur 2 et la surface accidentée 30 (formée, comme expliqué ci-dessus, par le tas de déchets 3 stockés sur le fond 202 du conteneur 2). Le module électronique 12 comporte un moyen de calcul 122 adapté à restituer le taux de remplissage du conteneur 2 en fonction dudit volume libre V.

De préférence, le module électronique 12 comporte en outre (figure 3) :
▪ un générateur 123 de nombres pseudo-aléatoires adapté à émettre des consignes de déclenchement au moins du premier capteur 11,
▪ un moyen mémoire 124 adapté à préenregistrer au moins une deuxième plage horaire τ₂ de déclenchement du premier capteur 11 et une quantité maximale de mesures du premier capteur 11 autorisée dans la deuxième plage horaire τ₂.

Le générateur 123 de nombres pseudo-aléatoires est adapté :
▪ à fonctionner uniquement dans la deuxième plage horaire τ₂ et
▪ à émettre, dans la deuxième plage horaire τ₂, les consignes en quantité inférieure ou égale à ladite quantité maximale.

Selon un deuxième de ses aspects, l'invention concerne une utilisation du dispositif autonome 1 selon l'invention, dans laquelle au moins le premier capteur 11 est choisi parmi les capteurs suivants : (a) émetteur-récepteur acoustiques ; (b) émetteur-récepteur ultrasonores ; (c) émetteur-récepteur infrarouges ; (d) émetteur-récepteur laser ; (e) capteur inductif ; (f) capteur capacitif ; (g) capteur vidéo.

Le premier capteur 11 du type émetteur-récepteur ultrasonores induisant un champ 110 des ondes ultrasonores entre le premier capteur 11 et la surface accidentée 30 qui permet de réaliser les mesures volumétriques du volume libre V à l'intérieur 21 du conteneur 2, est illustré sur les figures 4-6.

Selon un troisième de ses aspects, l'invention concerne une pluralité d'au moins deux dispositifs 1 autonomes selon l'invention, ces dispositifs autonomes 1 étant disposés à distance l'un de l'autre (par exemple, dans le même containeur 2 (exemple illustré sur la figure 6) et/ou dans les containeurs voisins (cas non représenté)) et sont interconnectés en réseau de communication de dispositifs autonomes 1 à l'aide des moyens respectifs de télécommunication 121, l'un (dit « relai » qui est disposé à gauche sur la figure 6) au moins parmi lesdits dispositifs autonomes 1 étant apte à communiquer, d'une part, avec l'autre parmi lesdits dispositifs autonomes 1, et, d'autre part, avec l'appareil distant de télécommunication représenté, par exemple, par un serveur d'un réseau distant (Internet, satellitaire, téléphonie mobile etc.).

Comme illustré sur les figures 3, 5-6, le dispositif autonome 1 et, en particulier, le module électronique 12 du dispositif autonome 1, peut être adapté à recevoir par l'intermédiaire du moyen de télécommunication 121 des requêtes provenant de l'appareil distant 4 de télécommunication.

Ces agencements contribuent à faciliter davantage la gestion à distance du dispositif autonome 1 (ou de ladite pluralité des dispositifs autonomes 1) depuis le centre de contrôle.

## Revendications

1. Dispositif autonome (1) de mesure télérelevé d'un taux de remplissage d'un conteneur (2) destiné à recevoir des déchets (3), le dispositif autonome (1) comportant :
▪ un moyen d'attache (10) adapté à fixer le dispositif autonome (1) sur une face interne (20) du conteneur (2),
▪ au moins un premier capteur (11) adapté à mesurer ledit taux de remplissage et à générer des premières données (D₁) en rapport avec les mesures du taux de remplissage,
▪ au moins un module électronique (12) de commande comportant une horloge (120) et un moyen de télécommunication (121), le module électronique (12) étant, à des instants successifs, adapté :
o à déclencher le premier capteur (11),
o à recevoir les premières données (D₁) provenant du premier capteur (11), et
o à communiquer les premières données (D₁) par l'intermédiaire du moyen de télécommunication (121) à un appareil distant (4) de télécommunication ;
▪ une source (13) d'énergie électrique adaptée à alimenter en énergie électrique le module électronique (12) de commande et au moins le premier capteur (11),
**caractérisé en ce qu'**il comporte en outre
- au moins une articulation (14) conçue pour assurer au moins un positionnement spatial réglable en rotation de l'axe de visée (VS) du premier capteur (11) par rapport à la face interne (20) du conteneur (2) selon au moins un premier axe (XX) de rotation ; et
- une enceinte de protection (15) comprenant :
▪ un premier compartiment (151) adapté à recevoir le premier capteur (11) et soit
▪ un deuxième compartiment (152) solidaire du moyen d'attache (10) et adapté à recevoir le module électronique (12) avec la source (13) d'énergie électrique,
les premier et deuxième compartiments (151), (152) étant liés l'un à l'autre par l'intermédiaire de l'articulation (14) ;
soit
▪ un deuxième compartiment (152) adapté à recevoir le module électronique (12) avec la source (13) d'énergie électrique,
les premier et deuxième compartiments (151), (152) étant solidaires, d'une part, l'un de l'autre, et, d'autre part, du moyen d'attache (10), ledit moyen d'attache (10) comportant ladite articulation (14).

2. Dispositif autonome (1) selon la revendication 1, **caractérisé en ce que** le premier capteur (11) est mobile autour d'un deuxième axe de rotation.

3. Dispositif autonome (1) selon l'une quelconque des revendications précédentes, **caractérisé en ce qu'**il comporte en outre au moins un deuxième capteur (16) lié au module électronique (12) et adapté à mesurer un état d'environnement (E) du conteneur (2) et à générer des deuxièmes données (D₂) en rapport avec les mesures dudit état d'environnement (E), **en ce que** le module électronique (12) est, à des instants successifs, adapté à recevoir les deuxièmes données (D₂) provenant du deuxième capteur (16) et à communiquer les deuxièmes données (D₂) par l'intermédiaire du moyen de télécommunication (121) à l'appareil distant (4) de télécommunication, et **en ce que** l'enceinte de protection (15) comprend au moins un troisième compartiment (153) lié à l'un au moins parmi les premier et deuxième compartiments (151), (152), le troisième compartiment (153) étant adapté à recevoir ledit deuxième capteur (16).

4. Dispositif autonome (1) selon la revendication 3, **caractérisé en ce que** l'état d'environnement (E) est propre à la température (T) à l'intérieur (21) du conteneur (2), et **en ce que** le deuxième capteur (16) comprend un premier actionneur (161) adapté à se mettre dans un état actif lorsque la température (T) à l'intérieur (21) du conteneur (2) mesurée par le deuxième capteur (16) dépasse un seuil préétabli.

5. Dispositif autonome (1) selon la revendication 3 ou 4, **caractérisé en ce que** l'état d'environnement (E) est propre à une présence d'un corps sélectif (5) à l'extérieur (22) du container (2), et **en ce que** le deuxième capteur (16) comprend un deuxième actionneur (162) adapté à se mettre dans un état actif lorsque le deuxième capteur (162) identifie la présence dudit corps sélectif (5) à l'extérieur (22) du container (2).

6. Dispositif autonome (1) selon l'une quelconque des revendications 3 à 5, **caractérisé en ce que** l'état d'environnement (E) est propre à une première plage horaire (τ₁), et **en ce que** le deuxième capteur (16) comprend un troisième actionneur (163) adapté à se mettre dans un état actif lorsque le deuxième capteur (16) constate ladite première plage horaire (τ₁).

7. Dispositif autonome (1) selon l'une quelconque des revendications précédentes, **caractérisé en ce que** le premier capteur (11) est adapté à mesurer un volume (V) du conteneur (2) libre de déchets (3) et **en ce que** le module électronique (12) comporte un moyen de calcul (122) adapté à restituer le taux de remplissage du conteneur (2) en fonction dudit volume libre (V).

8. Dispositif autonome (1) selon l'une quelconque des revendications 1 à 9, **caractérisé en ce que** le module électronique (12) comporte en outre :
▪ un générateur (123) de nombres pseudo-aléatoires adapté à émettre des consignes de déclenchement au moins du premier capteur (11),
▪ un moyen mémoire (124) adapté à préenregistrer au moins une deuxième plage horaire (τ₂) de déclenchement du premier capteur (11) et une quantité maximale de mesures du premier capteur (11) autorisée dans la deuxième plage horaire (τ₂), et
**en ce que** le générateur (123) de nombres pseudo-aléatoires est adapté :
▪ à fonctionner uniquement dans la deuxième plage horaire (τ₂) et
▪ à émettre, dans la deuxième plage horaire (τ₂), les consignes en quantité inférieure ou égale à ladite quantité maximale.

9. Dispositif autonome (1) selon l'une quelconque des revendications précédentes, **caractérisé en ce que** : le premier capteur (11) est mobile autour d'un premier axe de rotation (XX).

10. Dispositif autonome (1) selon l'une quelconque des revendications précédentes, **caractérisé en ce que** l'enceinte de protection (15) est solidaire en rotation du premier capteur (11).

11. Dispositif autonome (1) selon l'une quelconque des revendications précédentes, **caractérisé en ce que** ledit dispositif autonome (1) comprend une pluralité de modules individuels ou compartiments (151, 152, 153) couplés deux à deux, éventuellement mobiles en rotation entre eux.

## Patentansprüche

1. Selbstständige Vorrichtung (1) zur Fernablesung eines Füllstands eines Behälters (2), der dazu gedacht ist, Abfall (3) aufzunehmen, wobei die selbstständige Vorrichtung (1) Folgendes umfasst:
- ein Anbringungsmittel (10), das geeignet ist, um die selbstständige Vorrichtung (1) an einer Innenseite (20) des Behälters (2) zu befestigen,
- mindestens einen ersten Sensor (11), der geeignet ist, um den Füllstand zu messen und erste Daten (D₁) mit Bezug auf die Messungen des Füllstands zu generieren,
- mindestens ein elektronisches Steuermodul (12), das einen Taktgeber (120) und ein Telekommunikationsmittel (121) umfasst, wobei das elektronische Modul (12) zu aufeinanderfolgenden Zeitpunkten geeignet ist zum:
-- Auslösen des ersten Sensors (11),
-- Empfangen der ersten Daten (D₁), die von dem ersten Sensor (11) stammen, und
-- einem entfernt aufgestellten Telekommunikationsgerät (4) Mitteilen der ersten Daten (D₁) anhand des Telekommunikationsmittels (121);
- eine elektrische Energiequelle (13), die geeignet ist, um das elektronische Steuermodul (12) und mindestens den ersten Sensor (11) mit elektrischer Energie zu versorgen,
**dadurch gekennzeichnet, dass** sie ferner Folgendes umfasst:
- mindestens ein Gelenk (14), das ausgelegt ist, um mindestens eine drehmäßig einstellbare räumliche Positionierung der Visierachse (VS) des ersten Sensors (11) im Verhältnis zu der Innenseite (20) des Behälters (2) gemäß mindestens einer ersten Drehachse (XX) sicherzustellen; und
-- ein Schutzgehäuse (15), umfassend:
-- eine erste Abteilung (151), die geeignet ist, um den ersten Sensor (11) aufzunehmen, und
entweder
-- eine zweite Abteilung (152), die mit dem Anbringungsmittel (10) fest verbunden ist und geeignet ist, um das elektronische Modul (12) mit der elektrischen Energiequelle (13) aufzunehmen,
wobei die ersten und zweiten Abteilungen (151), (152) über das Gelenk (14) miteinander verbunden sind;
oder
-- eine zweite Abteilung (152), die geeignet ist, um das elektronische Modul (12) mit der elektrischen Energiequelle (13) aufzunehmen,
wobei die ersten und zweiten Abteilungen (151), (152) einerseits miteinander und andererseits mit dem Anbringungsmittel (10) fest verbunden sind, wobei das Anbringungsmittel (10) das Gelenk (14) umfasst.

2. Selbstständige Vorrichtung (1) nach Anspruch 1, **dadurch gekennzeichnet, dass** der erste Sensor (11) um eine zweite Drehachse herum beweglich ist.

3. Selbstständige Vorrichtung (1) nach einem der vorhergehenden Ansprüche, **dadurch gekennzeichnet, dass** sie ferner mindestens einen zweiten Sensor (16) umfasst, der mit dem elektronischen Modul (12) verbunden ist und geeignet ist, um einen Umgebungszustand (E) des Behälters (2) zu messen und zweite Daten (D₂) mit Bezug auf die Messungen des Umgebungszustands (E) zu generieren, dass das elektronische Modul (12) zu aufeinanderfolgenden Zeitpunkten geeignet ist, um die zweiten Daten (D₂) zu empfangen, die von dem zweiten Sensor (16) stammen, und die zweiten Daten (D₂) über das Telekommunikationsmittel (121) dem entfernt aufgestellten Telekommunikationsgerät (4) mitzuteilen, und dass das Schutzgehäuse (15) mindestens eine dritte Abteilung (153) umfasst, die mit mindestens einer von den ersten und zweiten Abteilungen (151), (152) verbunden ist, wobei die dritte Abteilung (153) geeignet ist, um den zweiten Sensor (16) aufzunehmen.

4. Selbstständige Vorrichtung (1) nach Anspruch 3, **dadurch gekennzeichnet, dass** der Umgebungszustand (E) von der Temperatur (T) im Innern (21) des Behälters (2) abhängig ist, und dass der zweite Sensor (16) ein erstes Stellglied (161) umfasst, das geeignet ist, um in einen aktiven Zustand versetzt zu werden, wenn die Temperatur (T) im Innern (21) des Behälters (2), die von dem zweiten Sensor (16) gemessen wird, über einen voreingestellten Schwellenwert hinausgeht.

5. Selbstständige Vorrichtung (1) nach Anspruch 3 oder 4, **dadurch gekennzeichnet, dass** der Umgebungszustand (E) von einem Vorhandensein eines selektiven Körpers (5) außerhalb (22) des Behälters (2) abhängig ist, und dass der zweite Sensor (16) ein zweites Stellglied (162) umfasst, das geeignet ist, um in einen aktiven Zustand versetzt zu werden, wenn der zweite Sensor (162) das Vorliegen des selektiven Körpers (5) außerhalb (22) des Behälters (2) identifiziert.

6. Selbstständige Vorrichtung (1) nach einem der Ansprüche 3 bis 5, **dadurch gekennzeichnet, dass** der Umgebungszustand (E) von einem ersten Zeitraum (τ₁) abhängig ist, und dass der zweite Sensor (16) ein drittes Stellglied (163) umfasst, das in der Lage ist, in einen aktiven Zustand versetzt zu werden, wenn der zweite Sensor (16) den ersten Zeitraum (τ₁) feststellt.

7. Selbstständige Vorrichtung (1) nach einem der vorhergehenden Ansprüche, **dadurch gekennzeichnet, dass** der erste Sensor (11) in der Lage ist, ein Volumen (V) des Behälters (2) ohne Abfall (3) zu messen, und dass das elektronische Modul (12) ein Rechenmittel (122) umfasst, das in der Lage ist, den Füllstand des Behälters (2) als Funktion des freien Volumens (V) wiederzugeben.

8. Selbstständige Vorrichtung (1) nach einem der Ansprüche 1 bis 7, **dadurch gekennzeichnet, dass** das elektronische Modul (12) ferner Folgendes umfasst:
- einen Zufallszahlgenerator (123), der geeignet ist, um Anweisungen zum Auslösen mindestens des ersten Sensors (11) zu emittieren,
- ein Speichermittel (124), das geeignet ist, um mindestens einen zweiten Zeitraum (τ₂) zum Auslösen des ersten Sensors (11) und eine Höchstmenge von Messungen des ersten Sensors (11), die in dem zweiten Zeitraum (τ₂) erlaubt sind, im Voraus zu speichern, und
dass der Zufallszahlgenerator (123) geeignet ist zum:
- Funktionieren nur in dem zweiten Zeitraum (τ₂), und
- Emittieren in dem zweiten Zeitraum (τ₂) der Anweisungen mit einer Menge, die kleiner oder gleich der Höchstmenge ist.

9. Selbstständige Vorrichtung (1) nach einem der vorhergehenden Ansprüche, **dadurch gekennzeichnet, dass**: der erste Sensor (11) um eine erste Drehachse (XX) herum beweglich ist.

10. Selbstständige Vorrichtung (1) nach einem der vorhergehenden Ansprüche, **dadurch gekennzeichnet, dass** das Schutzgehäuse (15) mit dem ersten Sensor (11) drehfest verbunden ist.

11. Selbstständige Vorrichtung (1) nach einem der vorhergehenden Ansprüche, **dadurch gekennzeichnet, dass** die selbstständige Vorrichtung (1) eine Vielzahl von Einzelmodulen oder Abteilungen (151, 152, 153) umfasst, die paarweise gekoppelt und gegebenenfalls im Verhältnis zueinander drehmäßig beweglich sind.

## Claims

1. Self-contained device (1) for the remotely recorded measurement of the degree of filling of a container (2) intended to receive waste (3), the self-contained device (1) comprising:
- an attachment means (10) suitable for fixing the self-contained device (1) to an internal face (20) of the container (2),
- at least one first sensor (11) suitable for measuring said degree of filling and to generate first data (D₁) in relation to the measurements of the degree of filling,
- at least one electronic control module (12) comprising a clock (120) and a telecommunication means (121), the electronic module (12) being, at successive instants, suitable for:
-- triggering the first sensor (11),
-- receiving the first data (D₁) coming from the first sensor (11), and
-- communicating the first data (D₁) through the communication means (121) to a distant telecommunication apparatus (4);
- an electrical energy source (13) suitable for supplying electrical energy to the electronic control module (12) and at least the first sensor (11), **characterised in that** it further comprises
- at least one articulation (14) designed to provide at least one rotationally adjustable spatial positioning of the axis of sight (VS) of the first sensor (11) with respect to the internal face (20) of the container (2) along at least a first axis of rotation (XX); and
- a protective chamber (15) comprising:
-- a first compartment (151) suitable for receiving the first sensor (11), and either
-- a second compartment (152) secured to the attachment means (10) and suitable for receiving the electronic module (12) with the electrical energy source (13),
the first and second compartments (151), (152) being connected to each other by means of the articulation (14);
or
-- a second compartment (152) suitable for receiving the electronic module (12) with the electrical energy source (13),
the first and second compartments (151), (152) being secured firstly to each other and secondly to the attachment means (10), said attachment means (10) comprising said articulation (14).

2. Self-contained device (1) according to claim 1, **characterised in that** the first sensor (11) is able to move about a second axis of rotation.

3. Self-contained device (1) according to any one of the preceding claims, **characterised in that** it further comprises at least one second sensor (16) connected to the electronic module (12) and suitable for measuring an environmental state (E) of the container (2) and generating second data (D₂) in relation to the measurements of said environmental state (E), **in that** the electronic module (12) is, at successive instants, able to receive the second data (D₂) coming from the second sensor (16) and communicating the second data (D₂) through the telecommunication means (121) to the distant telecommunication apparatus (4), and **in that** the protective chamber (15) comprises at least a third compartment (153) connected to at least one of the first and second compartments (151), (152), the third compartment (153) being suitable for receiving said second sensor (16).

4. Self-contained device (1) according to claim 3, **characterised in that** the environmental state (E) is particular to the temperature (T) on the inside (21) of the container (2), and **in that** the second sensor (16) comprises a first actuator (161) able to go into an active state when the temperature (T) on the inside (21) of the container (2) measured by the second sensor (16) exceeds a pre-established threshold.

5. Self-contained device (1) according to claim 3 or 4, **characterised in that** the environmental state (E) is particular to a presence of a selective body (5) on the outside (22) of the container (2), and **in that** the second sensor (16) comprises a second actuator (162) able to go into an active state when the second sensor (162) identifies the presence of said selective body (5) on the outside (22) of the container (2).

6. Self-contained device (1) according to any one of claims 3 to 5, **characterised in that** the environmental state (E) is particular to a first time range (τ₁) and **in that** the second sensor (16) comprises a third actuator (163) able to go into an active state when the second sensor (16) notes said first time range (τ₁).

7. Self-contained device (1) according to any one of the preceding claims, **characterised in that** the first sensor (11) is suitable for measuring a volume (V) of the container (2) free from waste (3) and **in that** the electronic module (12) comprises a computing means (122) suitable for retrieving the degree of filling of the container (2) according to said free volume (V).

8. Self-contained device (1) according to any one of claims 1 to 7, **characterised in that** the electronic module (12) further comprises:
▪ a pseudo-random number generator (123) suitable for issuing instructions triggering at least the first sensor (11),
▪ a memory means (124) suitable for pre-recording at least one second time range (τ₂) for triggering the first sensor (11) and a maximum quantity of measurements of the first sensor (11) enabled in the second time range (τ₂), and
**in that** the pseudo-random number generator (123) is suitable for:
▪ functioning only in the second time range (τ₂) and
▪ issuing, in the second time range (τ₂), the instructions in a quantity less than or equal to said maximum quantity.

9. Self-contained device (1) according to any one of the preceding claims, **characterised in that**: the first sensor (11) is able to move about a first axis of rotation (XX).

10. Self-contained device (1) according to any one of the preceding claims, **characterised in that** the protective chamber (15) is secured to the first sensor (11) so that they rotate together.

11. Self-contained device (1) according to any one of the preceding claims, **characterised in that** said self-contained device (1) comprises a plurality of individual modules or compartments (151, 152, 153) coupled in pairs, optionally able to move in rotation with respect to each other.
